# EUROPEAN PATENT APPLICATION

(11) **EP 4 672 563 A1**
(43) Date of publication of application: **31.12.2025**
(21) Application number: 24185390.2
(22) Date of filing: 28.06.2024
(51) Int. Cl.: H02K 1/32, H02K 9/19

(54) **A COOLING SYSTEM FOR AN ELECTRIC MOTOR**

(71) Applicant: Aurobay Sweden AB, 418 78 Göteborg (SE)
(72) Inventor: OLSSON, Jan-Ola, 437 93 LINDOME (SE); BOVO, Mirko, 422 43 HISINGS BACKA (SE)
(74) Representative: Zacco Sweden AB

(57) **Abstract**

A cooling system for an electric motor (15) comprising a rotor (1) for rotation about an axis of rotation (A) and a stator (16), the cooling system comprising a cooling liquid trough (3) provided in a longitudinal end (2) of a rotor (1) and extending around the axis of rotation (A) of the rotor (1). The cooling liquid trough (3) comprising an inner side (4), an opposing outer side (5), a bottom (6) connecting the inner and outer sides (4,5) and an opening (7). At least a portion of the inner and outer sides (4,5) extend in a radial direction of the axis of rotation (A) of the rotor (1), the bottom (6) being provided in a radial direction further from the axis of rotation (A) than the opening (7). A cooling liquid nozzle (14) configured for providing cooling liquid (9) to the cooling liquid trough (3) through the opening (7).

## Description

### Field of the invention

The invention relates to electric motors, and more specifically to a cooling system for an electric motor.

### Background of the invention

Electric motors, also known as e-machines, comprise a rotor and a stator. Both the rotor and the stator generate heat, and if the temperature is kept low, the electric motor may achieve higher specific power. This is especially true for operation at high power output for a prolonged period of time during continuous operation. Outer portions of the rotor are commonly associated with high heat load, however, these portions of the electric motor are not easily accessible, and effective cooling of the rotor has been proven difficult.

The stator is a further component associated with high heat load, and effective cooling of the stator ends has in particular proven difficult. A problem with cooling of the stator is issues related to decreased efficiency of the electric motor, and a key attribute of electric motors is the efficiency. Solutions where stationary cooling liquid nozzles are distributed on the stator around the axis of revolution of the rotor is known. The nozzles apply cooling liquid to the stator. However, such solutions are dependent on a large number of nozzles, and such solutions are complex and difficult to implement. Further, it is not trivial to actually aim the nozzles such that the cooling liquid is applied to the inner part of the stator end winding.

Cooling of the rotor brings an increased level of complexity, being a rotating part. Solutions exist to feed the rotor axle with coolant or oil. The cooling liquid is then led through the center of the rotor, but these solutions do not allow the cooling liquid to flow adjacent the heat source. Cooling through the axle is therefore relatively inefficient. Designing a solution with completely liquid-tight sealing for a shaft rotating at high RPM is a further challenge. If a plurality of channels for a cooling liquid is present in the rotor, there is an even higher risk of leakage. Further, there may be an issue with increased friction, as the different parts need to be fitted closely together. Manufacturing of such electric motors may also be difficult and costly, as the transfer of liquid from a stationary part to a rotating part increases the complexity and requirements for production tolerances of parts.

Known solutions for cooling the rotor and stator of an electric motor may compromise the efficiency of the electric motor, and comprise complex and ineffective solutions for delivering cooling liquid to the electric motor and cooling the parts of the electric motor associated with high heat load. There is therefore a need for an improved cooling system for an electric motor to reduce or eliminate the above mentioned disadvantages of known techniques. It is an objective of the invention to achieve this and to provide further advantages over the state of the art.

### Summary of the invention

It is an object of the invention to mitigate, alleviate or eliminate one or more of the above-identified deficiencies and disadvantages in the prior art and solve at least the above mentioned problem.

According to a first aspect, there is provided a cooling system for an electric motor comprising a rotor for rotation about an axis of rotation and a stator. The cooling system comprising a cooling liquid trough provided in a longitudinal end of the rotor and extending around the axis of rotation of the rotor. The cooling liquid trough comprising an inner side, an opposing outer side, a bottom connecting the inner and outer sides and an opening. At least a portion of the inner and outer sides extend in a radial direction of the axis of rotation of the rotor, the bottom being provided in a radial direction further from the axis of rotation than the opening. A cooling liquid nozzle is configured for providing cooling liquid to the cooling liquid trough through the opening. The cooling liquid trough is configured for receiving cooling liquid from a cooling liquid nozzle independent of the rotor, and a reservoir of cooling liquid may be provided in the rotor. The transfer of cooling liquid from the nozzle to the rotor does not require liquid tight connections, etc. As the rotor rotates, the cooling liquid may be maintained in the cooling liquid trough, or distributed further through the rotor by centrifugal effects, and efficient cooling of the rotor is achieved.

According to an embodiment, the cooling liquid trough comprises a rotationally symmetric shape extending around the axis of rotation.

According to an embodiment, the cooling liquid trough extends circularly around the axis of rotation.

According to an embodiment, the inner side extends radially inwards to an axel and provides an annular recess in the longitudinal end.

According to an embodiment, the cooling liquid trough is connected to at least one cooling channel provided in the rotor.

According to an embodiment, at least one cooling channel extends in a longitudinal direction in the rotor.

According to an embodiment, at least one cooling channel extends in a radial direction in the rotor.

According to an embodiment, the cooling liquid trough is connected to the at least one cooling channel at the bottom.

According to an embodiment, the cooling liquid nozzle is stationary.

According to an embodiment, the cooling liquid nozzle is provided separate from the rotor and stator.

According to an embodiment, the cooling liquid nozzle extends from an outside of the rotor into the rotor past the outer side of the cooling liquid trough in a longitudinal direction of the axis of rotation.

According to an embodiment, the cooling liquid nozzle is configured to provide cooling liquid to the cooling liquid trough by low pressure.

According to an embodiment, the cooling liquid nozzle is configured to provide cooling liquid to the cooling liquid trough in a tangential direction of the axis of rotation.

According to an embodiment, a plurality of cooling liquid nozzles is provided at different radial distances from the axis of rotation to provide cooling liquid to the cooling liquid trough.

### Brief description of the figures

The aspects of the invention, including its particular features and advantages, will be readily understood from the following detailed description and the accompanying figures. The figures are provided to illustrate the general structures of the invention. Like reference numerals refer to like elements throughout.
Figure 1a shows a cross section in a radial direction of a rotor of a first embodiment of a cooling system for an electric motor. The rotor comprises a cooling liquid trough provided on a longitudinal end of the rotor, and cooling channels extending longitudinally. A stationary cooling liquid nozzle extends into the rotor.
Figure 1b shows a view in a longitudinal direction of the first embodiment. The bottom portion of the cooling liquid trough, cooling channels and cooling liquid nozzle are indicated.
Figure 2a shows a cross section in a radial direction of a rotor of a second embodiment of a cooling system for an electric motor. The rotor comprises a cooling liquid trough provided on a longitudinal end of the rotor. A stationary cooling liquid nozzle extends into the rotor.
Figure 2b shows a view in a longitudinal direction of the second embodiment. The bottom portion of the cooling liquid trough and cooling liquid nozzle are indicated.
Figure 3 shows a cross section in a radial direction of an electric motor of a third embodiment of a cooling system for an electric motor. The rotor comprises a cooling liquid trough provided on a longitudinal end of the rotor, and cooling channels extending radially. A stationary cooling liquid nozzle extends into the rotor.
Figure 4 shows a view in a longitudinal direction of a rotor. The cooling system comprises a plurality of stationary cooling liquid nozzles.
Figure 5 shows a view in a longitudinal direction of a rotor comprising an embodiment of a cooling liquid trough.

### Detailed description of the invention

The invention will now be described with reference to the accompanying figures, in which preferred example embodiments of the invention are shown. The invention may, however, be embodied in other forms and should not be construed as limited to the herein disclosed embodiments. The disclosed embodiments are provided to fully convey the scope of the invention to the skilled person.

It is to be understood that the terminology used herein is for purpose of describing particular embodiments only, and is not intended to be limiting. It should be noted that, as used in the specification and the appended claims, the articles "a", "an" and "the" are intended to mean that there are one or more of the elements or steps unless the context explicitly dictates otherwise. Thus, for example, reference to "a unit" or "the unit" may include several devices, and the like. Furthermore, the words "comprising", "including", "containing" and similar wordings does not exclude other elements or steps.

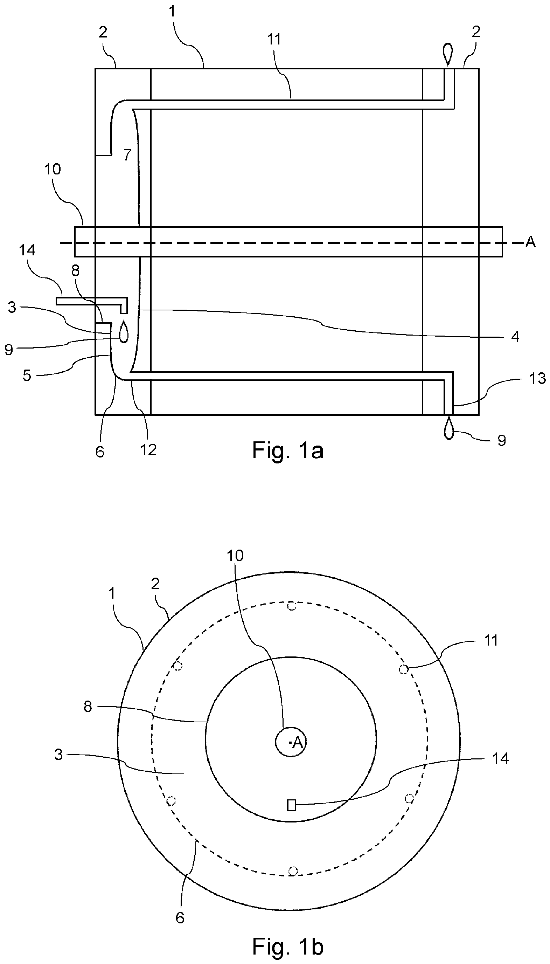

Referring initially to figures 1a and 1b, a first embodiment of a cooling system for a rotor 1 of an electric motor is shown. The rotor 1 is configured to rotate about an axis of rotation A. The rotor 1 comprises longitudinal ends 2. The longitudinal ends 2 are provided at opposite longitudinal ends of the rotor 1 along the axis of rotation A. The longitudinal ends 2 may comprise endplates or similar elements, defining the outer longitudinal ends of the rotor 1. Alternatively, if the rotor 1 does not comprise endplates, the longitudinal ends 2 may simply be portions of the rotor at terminal ends along the axis of rotation A.

A cooling liquid trough 3 is provided in a longitudinal end 2. In the illustrated embodiment, only one longitudinal end 2 comprises a cooling liquid trough 3, but a cooling liquid trough 3 may be provided at both longitudinal ends 2. The cooling liquid trough 3 comprises an inner side 4, an outer side 5, a bottom 6 and an opening 7. The outer side 5 extends inwards towards the axis of rotation A from the bottom 6 and is terminated at an edge 8. The opening 7 is in the illustrated embodiment open in a radial direction from the cooling liquid trough 3 towards the axis of rotation A. The opening 7 is an opening in the cooling liquid trough 3 extending between the edge 8 and the inner side 4. The bottom 6 is provided further away from the axis of rotation A, in a radial direction, relative to the opening 7. The cooling liquid trough 3 extends around the axis of rotation A of the rotor 1, and is configured for receiving and holding a cooling liquid 9. As the rotor 1 is rotated about the axis of rotation A, the cooling liquid 9 provided in the cooling liquid trough 3 is forced towards the bottom 6 as centrifugal forces act on the cooling liquid 9. As the rotor 1 rotates, the cooling liquid 9 is distributed in the cooling liquid trough 3 around the axis of rotation A.

An axel 10 may be provided at the center of the rotor 1. The axel 10 is coincident with the axis of rotation A, and may extend in a longitudinal direction through the rotor 1. The axel 10 may form part of the rotor 1. The inner side 4 of the cooling liquid trough 3 extends from the bottom 6 in a radial direction inwards towards the axel 10. The inner side 4 may extend to the axel 10, and the cooling liquid trough 3 may form a generally flat-bottomed, annular recess in the longitudinal end 2 of the rotor 1, as can be seen in figure 1a. The inner side 4 extends in a radial direction inwards towards the axis of rotation A a distance past the edge 8.

The cooling liquid trough 3 extends around the axis of rotation A, as can be seen in figure 1b, where the bottom 6 is indicated with dotted lines and the edge 8 of the outer side 5 is shown. The cooling liquid trough 3 preferably extends fully around the circumference of the axis of rotation A. The centrifugal forces from the rotation of the rotor 1 ensures even distribution of cooling liquid 9 in the cooling liquid trough 3. Even though the cooling liquid 9 is unevenly applied or provided to the cooling liquid trough 3, it is evenly distributed over the length of the bottom 6 as the rotor 1 rotates. The cooling liquid trough 3 may extend circularly around the axis of rotation A, as illustrated in figure 1b. At least the bottom 6 may extend circularly around the axis of rotation A. The cooling liquid may thus be evenly distributed over the length of the cooling liquid trough 3 as the rotor 1 rotates. A rotor 1 of an electric motor rotates at a sufficiently high RPM to maintain the cooling liquid 9 in the cooling liquid trough 3.

The cooling liquid trough 3 may be connected to a cooling channel 11. More specifically, the cooling liquid trough 3 may be connected to at least one cooling channel 11. The cooling channels 11 may extend partially or fully in a longitudinal direction through the rotor 1. The cooling channels 11 may cool areas of the rotor 1 particularly exposed to heat. The cooling channels 11 are preferably distributed evenly in the rotor 1 around the axis of rotation A, to ensure balance of the rotor 1. Because the rotor 1 rotates at high RPM, the rotor 1 may comprise only a few cooling channels 11. Any number of cooling channels 11 higher than one may provide a rotationally balanced design of the rotor 1, as the cooling channels 11 may be provided in the rotor 1 rotationally symmetrical about the axis of rotation A. The cooling channels 11 may comprise a cross section, or otherwise be designed such that a predetermined amount of cooling liquid 9 is allowed to pass through the cooling channels 11 at a given RPM of the rotor 1.

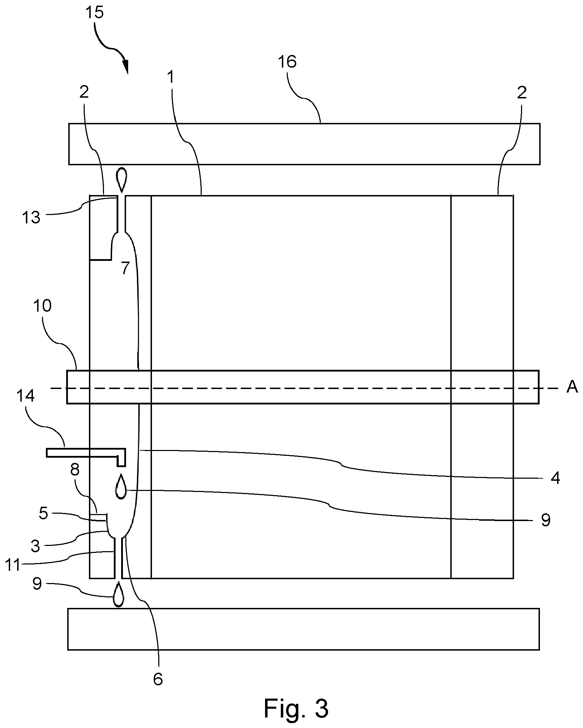

An inlet 12 of a cooling channel 11 may be provided at the cooling liquid trough 3. An outlet 13 of the cooling channel 11 may be provided at the opposite longitudinal end 2 of the rotor 1, or elsewhere on the rotor 1 where the cooling channels 11 ends. The cooling liquid 9 may exit the cooling channel 11 and the rotor 1 at the outlet 13. As the cooling liquid exits the rotor 1 it may further be used to cool e.g. a portion of a stator, as described with reference to figure 3. If a cooling liquid trough 3 is provided at both longitudinal ends 2, cooling channels 11 may extend in both longitudinal directions of the rotor 1. This ensures a balanced rotor 1. Outlets 13 may thus be provided at both longitudinal ends 2, to provide cooling of the inside of both stator ends. Outlets 13 may also be provided on the rotor 1 in between the two longitudinal ends 2.

The cooling channel 11 may be connected to the cooling liquid trough 3 at the bottom 6, such that the cooling liquid trough 3 may be completely drained from cooling liquid 9 if no new cooling liquid 9 is provided. Alternatively, the inlet 12 may be provided on the cooling liquid trough 3 a distance radially inwards towards the axis of rotation A from the bottom 6. There is thus an amount of cooling liquid 9 present at the bottom 6 of the cooling liquid trough 3 even if the supply of cooling liquid 9 is stopped. The cooling channels 11 are in figure 1b indicated with dotted lines to indicate the positioning thereof.

The cooling system further comprises a cooling liquid nozzle 14. The cooling liquid nozzle 14 is preferably provided stationary, and may preferably be provided adjacent the rotor 1. The cooling liquid nozzle 14 may be provided separate from the rotor 1 and stator 16, and may e.g. be provided on a stationary part adjacent the rotor 1. If the rotor 1 comprises a cooling liquid trough 3 provided at both longitudinal ends 2, a cooling nozzle 14 is preferably provided adjacent each of the longitudinal ends 2. The cooling liquid nozzle 14 may extend from an outside of the rotor 1 into the rotor 1 past the outer side 5 of the cooling liquid trough 3 in a longitudinal direction of the axis of rotation A. The cooling liquid 9 may thus be delivered to the rotor 1 in a controlled manner and without risk of spilling. Further, feeding cooling liquid 9 to a cooling liquid nozzle 14 provided stationary adjacent the rotor 1 is easy to achieve as does not involve flowing liquid to e.g. a rotating part. There is therefore minimal risk of leakage, and little maintenance is required.

Cooling liquid 9 is dispensed from the cooling liquid nozzle 14 into the cooling liquid trough 3. The cooling liquid 9 may be dispensed from the cooling liquid nozzle 14 by means of a jet spray. The rate of cooling liquid 9 provided to the cooling liquid trough 3 may be adjusted depending on various parameters. The cooling liquid trough 3 may be generally empty when the rotor 1 is stationary. As the rotor 1 starts rotating, the rate of cooling liquid 9 provided to the cooling liquid trough 3 may e.g. exceeding the flow capacity of the cooling channels 11, to thereby fill the cooling liquid trough 3. As the cooling liquid trough 3 is filled, the rate may be decreased to maintain the amount of cooling liquid 9 in the cooling liquid trough 3. The flow capacity of the cooling channel 11 may also be higher than the rate of cooling liquid 9 provided to the cooling liquid trough 3, such that the rate of cooling liquid 9 provided to the cooling liquid trough 3 may only be exceeded (and the maximum flow capacity of the cooling channel 11 reached) during heat peak load for the rotor 1.

The cooling liquid nozzle 14 may extend into the cooling liquid trough 3. The cooling liquid nozzle 14 may thus extend into the rotor 1 past the edge 8 of the outer side 5 in a longitudinal direction of the axis of rotation A. The cooling liquid nozzle 14 may further be configured to provide cooling liquid 9 to the cooling liquid trough 3 by low pressure. Low pressure is defined as pressure sufficient to expel cooling liquid 9 from the cooling liquid nozzle 14, but insufficient to affect the speed or direction of the cooling liquid 9 as it enters the rotor 1 and cooling liquid trough 3. The only force acting on the cooling liquid 9, and provide the cooling liquid with a speed and direction, is gravity. The cooling liquid 9 may as such in an embodiment drip from the cooling liquid nozzle 14 and be provided in the cooling liquid trough 3 by gravity.

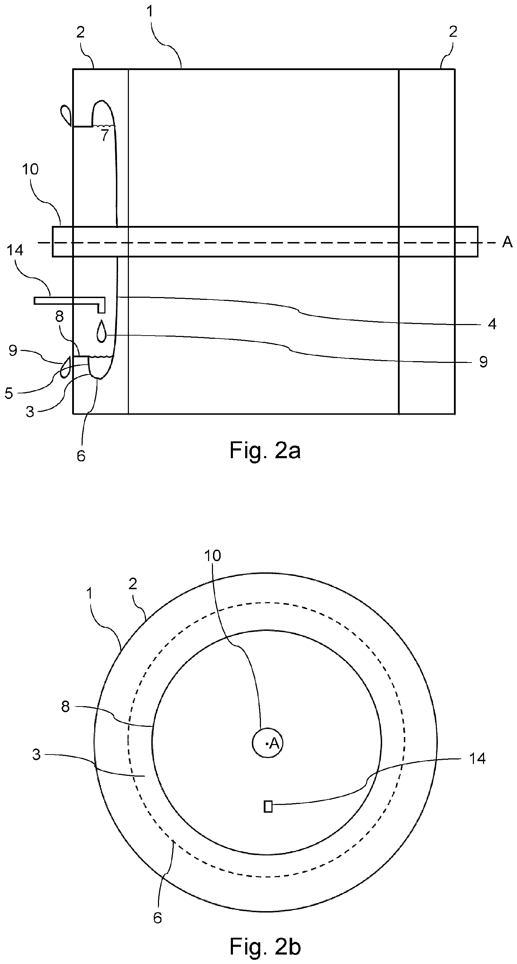

Referring to figures 2a and 2b, a second embodiment of a cooling system for an electric motor is shown. The second embodiment shares features in common with the first embodiment. These features may not be described in detail with reference to the second embodiment, but are indicated with the same reference numbers in figures 2a and 2b. The description of the features described with reference to the first embodiment are applicable for the second embodiment as well, unless pointed out otherwise.

In the second embodiment, the cooling liquid trough 3 is not connected to cooling channels for flowing the cooling liquid 9 from the cooling liquid trough 3. Instead, the cooling liquid trough 3 of the second embodiment is configured to be flooded as the rotor 1 rotates and the cooling liquid nozzle 14 provides cooling liquid 9 to the cooling liquid trough 3. The cooling liquid trough 3 may be provided at both longitudinal ends 2. As the cooling liquid trough 3 is full, i.e. the cooling liquid 9 fills the cooling liquid trough 3 from the bottom 6 to the edge 8, excess cooling liquid 9 flows over the edge 8 and is driven in a radial direction outwards from the axis of rotation A. As the cooling liquid 9 flows outwards from the cooling liquid trough 3, it may cool the longitudinal end 2. As the cooling liquid exits the rotor 1 by means of the centrifugal force, it may further be used to cool e.g. a portion of a stator.

The edge 8 may comprise recesses to flow the cooling liquid 9 from the cooling liquid trough 3 at predefined locations. The outer side 5 of this embodiment may thus have a shorter radial extent at the location of the recesses, and the cooling fluid 9 is controlled to flow from the cooling liquid trough 3 at these locations.

Referring to figure 3, a third embodiment of a cooling system for an electric motor 15 is shown. The third embodiment shares features in common with the first and second embodiments. These features may not be described in detail with reference to the third embodiment, but are indicated with the same reference numbers in figure 3. The description of the features described with reference to the first and second embodiments are applicable for the third embodiment as well, unless pointed out otherwise.

In the third embodiment, the electric motor 15 is illustrated with a stator 16. The stator 16 encircles the rotor 1 around the axis of rotation A. The cooling liquid trough 3 is provided in a longitudinal end 2 of the rotor 1 and is in the third embodiment connected to cooling channels 11 extending radially outwards from the cooling liquid trough 3. A cooling liquid trough 3 may be provided at both longitudinal ends 2. The cooling channels 11 are preferably connected to the bottom 6 of the cooling liquid trough 3. The cooling liquid trough 3 may be connected to one or a plurality of cooling channels 11. The outlet 13 of a cooling channel 11 may be provided in the same longitudinal end 2 as the cooling liquid trough 3. The rotor 1 may additionally be provided with cooling channels 11 extending longitudinally through the rotor 1, as described with reference to the first embodiment.

The cooling liquid 9 is provided to the cooling liquid trough 3 by the stationary cooling liquid nozzle 14, as described with reference to the previous embodiments. The cooling liquid 9 exits the rotor 1 at the outlets 13, and is then applied to the stator 16, encircling the rotor 1. As such, inner end windings of the stator 16 may be effectively cooled. This is an area of the stator 16 which is traditionally difficult to cool, but which is associated with high heat load. To provide cooling of both end windings of a stator 16, the rotor 1 may comprise a cooling system according to the first and second or first and third embodiments. Alternatively, the rotor 1 may comprise the cooling system of the first, second or third embodiment arranged in both longitudinal ends 2 of a rotor 1.

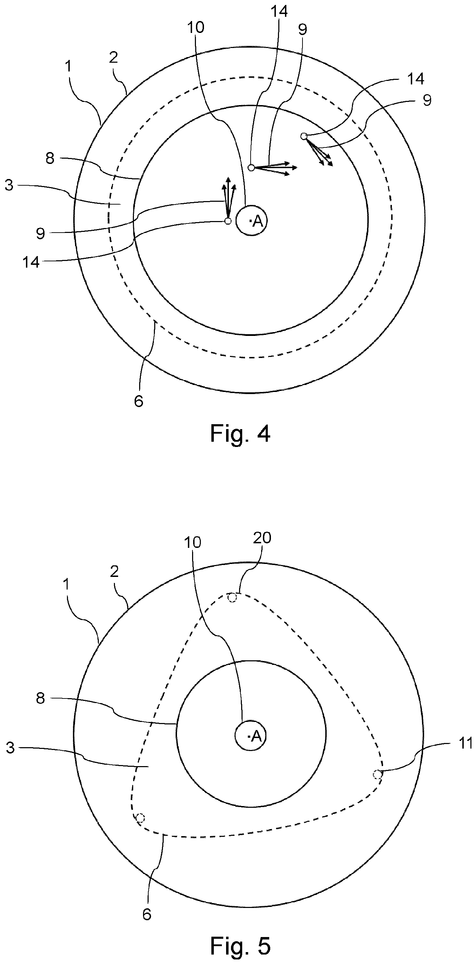

Referring to figure 4, an embodiment of a longitudinal end 2 of a rotor 1 is shown. In this embodiment, a plurality of cooling liquid nozzles 14 are provided. The illustrated embodiment shows three cooling liquid nozzles 14, but the cooling system for the rotor 1 may comprise any number of cooling liquid nozzles 14, including one. The cooling liquid nozzles 14 are provided on a stationary part (not shown in the figure) adjacent the rotor 1. Each cooling liquid nozzle 14 may be directed such that the cooling liquid 9 is directed in a tangential direction of the axis of rotation A. In figure 4, the direction of rotation for the rotor 1 is clockwise, and the direction of the cooling liquid 9 spray is thus tangential for each of the cooling liquid nozzles 14. The cooling liquid 9 may be dispensed from the at least one cooling liquid nozzle 14 at high pressure. High pressure is a pressure sufficient to dispense the cooling liquid 9 from the cooling liquid nozzle 14 with a speed and direction equivalent to the rotor 1. The speed of the cooling liquid 9 from the cooling liquid nozzle 14 may generally equal the rotation speed of the rotor 2 at the location of the cooling liquid nozzle 14. The at least one cooling liquid nozzle 14 may extend in a longitudinal direction to the axis of rotation A into the rotor 1 past the edge 8, e.g. as illustrated in figures 1a, 2a and 3.

Alternatively, the cooling liquid nozzles 14 may be provided in a longitudinal direction to the axis of rotation A outside the edge 8, such that the spray of cooling liquid 9 is pointed also in a longitudinal direction of the axis of rotation A, to provide the cooling liquid trough 3 with cooling liquid 9. A plurality of cooling liquid nozzles 14 may be provided at the same radius from the axis of rotation A, distributed both evenly or randomly around the axis of rotation A. Alternatively, or in addition, the plurality of cooling liquid nozzles 14 may be provided at different radiuses from the axis of rotation A of the rotor 1.

Referring to figure 5, an embodiment of a longitudinal end 2 of a rotor 1 is shown. The cooling liquid trough 3 may comprise a rotationally symmetric shape, extending around the axis of rotation A. More specifically, the cooling liquid trough 3 may comprise identical portions, arranged rotationally symmetrical about the axis of rotation A. The weight distribution of the rotor 1 is thus balanced, even if the cooling liquid trough comprises extremities 20 for collection of cooling liquid. The illustrated embodiment shows three identical potions, arranged rotationally symmetrical about the axis of rotation A. The bottom 6 of the cooling liquid trough 3, seen in the direction along the axis of rotation A, is thus shaped like a rounded triangle. The edge 8 may comprise a circular shape, seen in the direction along the axis of rotation A. Alternatively, the edge 8 may be shaped correspondingly to the bottom 6, seen in the direction along the axis of rotation A. As the rotor 1 rotates about the axis of rotation A, cooling liquid is forced towards each outer extremity 20 of the rounded triangle or corresponding shape. As the cooling liquid is provided evenly to the rotor 1 from one or more cooling liquid nozzles, the cooling liquid is distributed evenly between the extremities 20.

A cooling liquid channel 11 may be connected to e.g. the bottom portion of the cooling liquid trough 3, as described with reference to figures 1a, 1b and 3. The inlet of a cooling liquid channel 11 may thus be provided at each extremity 20 of the cooling liquid trough 3. If the cooling system does not comprise any cooling liquid channels 11, the cooling liquid trough 3 can be designed for overflow, as described with reference to the second embodiment of figures 2a and 2b.

While the invention has been described with reference to the embodiments mentioned above, it is to be understood that modifications and variations can be made without departing from the scope of the present invention, and such modifications and variations shall remain within the field and scope of the invention, as defined by the appended claims.

## Claims

1. A cooling system for an electric motor (15) comprising a rotor (1) for rotation about an axis of rotation (A) and a stator (16), the cooling system comprising;
a cooling liquid trough (3) provided in a longitudinal end (2) of the rotor (1) and extending around the axis of rotation (A) of the rotor (1);
the cooling liquid trough (3) comprising an inner side (4), an opposing outer side (5), a bottom (6) connecting the inner and outer sides (4,5) and an opening (7);
at least a portion of the inner and outer sides (4,5) extend in a radial direction of the axis of rotation (A) of the rotor (1), the bottom (6) being provided in a radial direction further from the axis of rotation (A) than the opening (7);
a cooling liquid nozzle (14) configured for providing cooling liquid (9) to the cooling liquid trough (3) through the opening (7).

2. The cooling system according to claim 1, wherein the cooling liquid trough (3) comprises a rotationally symmetric shape extending around the axis of rotation (A).

3. The cooling system according to claim 2, wherein the cooling liquid trough (3) extends circularly around the axis of rotation (A).

4. The cooling system according to any one of the preceding claims, wherein the inner side (4) extends radially inwards to an axel (10) and provides an annular recess in the longitudinal end (2).

5. The cooling system according to any one of the preceding claims, wherein the cooling liquid trough (3) is connected to at least one cooling channel (11) provided in the rotor (1).

6. The cooling system according to claim 5, wherein at least one cooling channel (11) extends in a longitudinal direction in the rotor (1).

7. The cooling system according to claim 5 or 6, wherein at least one cooling channel (11) extends in a radial direction in the rotor (1).

8. The cooling system according to any one of claims 5-7, wherein the cooling liquid trough (3) is connected to the at least one cooling channel (11) at the bottom (6).

9. The cooling system according to any one of the preceding claims, wherein the cooling liquid nozzle (14) is stationary.

10. The cooling system according to any one of the preceding claims, wherein the cooling liquid nozzle (14) is provided separate from the rotor (1) and stator (16).

11. The cooling system according to any one of the preceding claims, wherein the cooling liquid nozzle (14) extends from an outside of the rotor (1) into the rotor (1) past the outer side (5) of the cooling liquid trough (3) in a longitudinal direction of the axis of rotation (A).

12. The cooling system according to any one of the preceding claims, wherein the cooling liquid nozzle (14) is configured to provide cooling liquid (9) to the cooling liquid trough (3) by low pressure.

13. The cooling system according to any one of the preceding claims, wherein the cooling liquid nozzle (14) is configured to provide cooling liquid (9) to the cooling liquid trough (3) in a tangential direction of the axis of rotation (A).

14. The cooling system according to any one of the preceding claims, wherein a plurality of cooling liquid nozzles (14) are provided at different radial distances from the axis of rotation (A) to provide cooling liquid (9) to the cooling liquid trough (3).
